# EUROPÄISCHE PATENTANMELDUNG

(11) **EP 1 500 360 A1**
(43) Veröffentlichungstag der Anmeldung: **26.01.2005**
(21) Anmeldenummer: 04015418.9
(22) Anmeldetag: 30.06.2004
(51) Int. Cl.: A47J 37/08

(54) **Elektrischer Brotröster**

(30) Priorität: 22.07.2003 DE 10333312
(71) Anmelder: BSH Bosch und Siemens Hausgeräte GmbH, 81739 München (DE)
(72) Erfinder: Kropf, Albert, 83365 Sondermoning-Nussdorf (DE); Schönfelder, Thomas, 83250 Marquatstein (DE)

(57) **Zusammenfassung**

Die Erfindung betrifft einen elektrischen Brotröster (10) mit einem Gehäuse (14), das mindestens einen Röstraum (18) und einen daneben angeordneten Steuerraum aufweist, in dem ein Steuerschlitten (36) und ein daran gehalteter, sich durch den Röstraum (18) erstreckender Brotträger mittels einer in einer Gehäuseseitenwand (22) geführten und nach außen ragenden Handbetätigungseinrichtung (26) von einer Entnahmestellung gegen den Widerstand eines Federelementes in eine Röststellung bewegbar ist und in dieser mittels einer Halteeinrichtung fixierbar ist, bis die Halteeinrichtung durch einen Zeitschalter oder eine manuelle Betätigung freigegeben wird.

Weiterhin ist eine Dämpfungseinrichtung vorgesehen, die durch eine Zahnstange (34) und ein damit kämmendes Zahnrad (38) gebildet ist, wobei die Dämpfungseinrichtung die Beschleunigung des Steuerschlittens (36) bei der Bewegung von der Röststellung in die Entnahmestellung abbremst.

Es ist vorgesehen, dass das Zahnrad (38) der Handbetätigungseinrichtung (26) zugeordnet ist, und dass die Zahnstange (34) am Gehäuse (14) bzw. an einem fest mit diesem verbundenen Gehäuseteil fixiert ist.

## Beschreibung

Die vorliegende Erfindung betrifft einen elektrischen Brotröster gemäß Oberbegriff des Patentanspruchs 1.

Bei einem vertikal im Gehäuse eines Brotrösters verschiebbaren Brotträger kann der unerwünschte Effekt auftreten, dass bei einem Abschalten der Heizeinrichtung der Brotträger mit Schwung vertikal nach oben gegen einen mechanischen Anschlag bewegt wird, wobei die Gefahr besteht, dass das auf dem Brotträger befindliche Brot aus dem Gehäuse des Brotrösters ausgeworfen wird. Zudem kann die Geräuschentwicklung beim Zurückfahren des Brotträgers in seine Ausgangsstellung unerwünscht sein.

Ein elektrischer Brotröster mit einer Dämpfungseinrichtung ist aus der DE 197 05 780 C1 bekannt. Die Dämpfungseinrichtung bremst die Beschleunigung eines Steuerschlittens bei der Bewegung des Brotträgers von der Röststellung in die Entnahmestellung ab. Die Dämpfungseinrichtung ist durch eine am Gehäuse gehalterte Zahnstange und ein an dem Steuerschlitten drehbar und gedämpft gelagertes Zahnrad gebildet, die beim Bewegen des Steuerschlittens von der Röststellung in die Entnahmestellung miteinander kämen. Die Zahnstange ist hierbei schwenkbar an dem Gehäuse gehaltert.

Weiterhin ist aus der EP 0 084 065 A1 ein Brotröster mit einem Brötchenröstaufsatz bekannt, der in vertikaler Richtung entlang einer Gehäuseseitenwand verschiebbar gehaltert ist. Zumindest Teilbereiche der aneinanderliegenden Flächen der Führung des Brötchenaufsatzes sind hierbei mit die Reibung erhöhenden Mitteln versehen, beispielsweise in Form einer waagrecht verlaufenden oder gitterförmigen Riffelung oder aus in Abstand voneinander angeordneten zugespitzten Stiften. Auf diese Weise wird eine Rastmöglichkeit für den Brötchenaufsatz gebildet, der dadurch in verschiedenen Höhen eingerastet werden kann.

Der vorliegenden Erfindung liegt die Aufgabe zu Grunde, eine einfach aufgebaute und zuverlässig arbeitende Dämpfungseinrichtung für einen verschiebbaren Brotträger eines elektrischen Brotrösters zur Verfügung zu stellen, die nach Möglichkeit in einen vorhandenen Verschiebemechanismus integriert werden kann.

Diese Aufgabe wird mit dem Gegenstand des unabhängigen Patentanspruchs gelöst. Merkmale vorteilhafter Weiterbildungen ergeben sich aus den abhängigen Ansprüchen.

Gemäß der Erfindung weist ein elektrischer Brotröster mit den Merkmalen des Oberbegriffs des Patentanspruchs 1 eine Dämpfungseinrichtung auf, welche eine Zahnstange und ein damit kämmendes Zahnrad umfasst. Die Drehbewegung des Zahnrads wird hierbei zumindest in einer Verschieberichtung eines Steuerschlittens durch geeignete Mittel abgebremst, so dass insgesamt die gewünschte Wirkung der gedämpften Bewegung des Brotträgers zwischen einer Röststellung und einer Entnahmestellung gewährleistet wird. Das Zahnrad ist einer Handbetätigungseinrichtung zugeordnet, welche mit dem Steuerschlitten verbunden ist. Die Zahnstange ist starr am Gehäuse bzw. an einem fest mit diesem verbundenen Gehäuseteil fixiert. Aufgrund der ständig miteinander kämmenden Verzahnung kann eine sehr einfache Dämpfungseinrichtung realisiert werden, da keinerlei Vorrichtungen notwendig sind, welche für ein Ein- oder Ausrücken der Verzahnung sorgen müsste.

Die Zahnstange kann insbesondere integraler Bestandteil des Gehäuses bzw. des fest mit diesem verbundenen Gehäuseteils sein, wodurch sich die Konstruktion, Fertigung und Montage des elektrischen Brotrösters vereinfachen lässt. Gemäß einer bevorzugten Ausführungsform ist die Zahnstange an einer Innenseite einer Abdeckplatte angeordnet, die lösbar außen an der Gehäuseseitenwand befestigt ist. Die Zahnstange ist hierbei vorzugsweise einstückig mit der Abdeckplatte ausgebildet, so dass durch Aufsetzen der Abdeckplatte gleichzeitig die Zahnstange an ihren gewünschten Einbauort gebracht wird.

Durch Integration der Zahnstange in den Verschiebemechanismus ist eine deutliche Vereinfachung der Konstruktion erreichbar, da die Abdeckplatte und die Zahnstange in einem Teil in einem Arbeitsgang herstellbar sind. Insbesondere kann die Abdeckplatte zusammen mit der Zahnstange aus einem Spritzgussteil, bspw. aus Kunststoff oder aus Leichtmetall, hergestellt sein.

Das Zahnrad ist gemäß einer bevorzugten Ausgestaltung der Erfindung drehbar am verschiebbaren Steuerschlitten der Handbetätigungseinrichtung gelagert, der an der Gehäuseseitenwand entlang der Abdeckplatte verschiebbar geführt ist. Der verschiebbare Schlitten kann insbesondere einen Griffbügel aufweisen, der an der Gehäuseseitenwand in vertikaler Richtung geführt ist. Eine bevorzugte Variante kann vorsehen, dass seitliche Verbindungsabschnitte des Griffbügels die Abdeckplatte seitlich umgreifen. Mit dieser Gestaltung kann eine mechanisch zuverlässig arbeitende und optisch vorteilhaft in das Gehäusedesign integrierbare Dämpfungseinrichtung zur Verfügung gestellt werden.

Die Dämpfung der Drehbewegung des Zahnrads kann bspw. durch eine Lagerung mit einer Fettfüllung oder durch eine ein- oder zweiseitig wirkende Federung erreicht werden. Die Viskosität der Fettfüllung sorgt hierbei für die gewünschte Dämpfungscharakteristik.

Die Erfindung wird nachfolgend anhand eines bevorzugten Ausführungsbeispiels unter Bezugnahme der beiliegenden Zeichnungen näher erläutert. Dabei zeigt:
- Figur 1: einen elektrischen Brotröster in schematischer Perspektivansicht und
- Figur 2: eine schematische Perspektivdarstellung eines Teils einer erfindungsgemäßen Dämpfungseinrichtung.

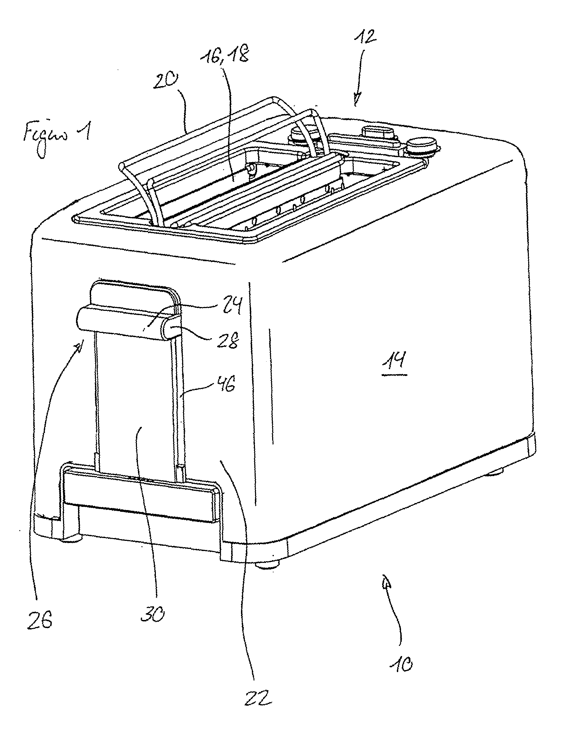

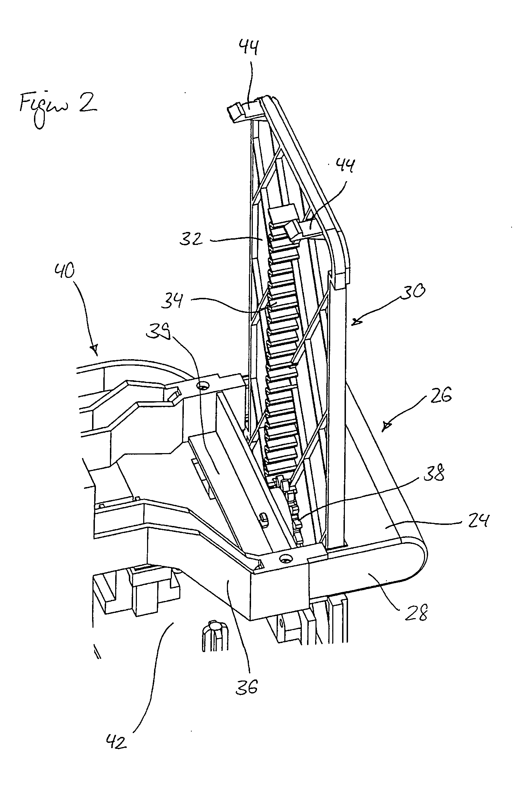

Die Figur 1 zeigt einen elektrischen Brotröster 10 in schematischer Perspektivdarstellung. An einer Oberseite 12 eines Gehäuses 14 sind Öffnungen 16 für einen vertikal angeordneten Röstraum 18 erkennbar. Eine verschiebbare oder verschwenkbare Röstauflage 20 ist optional, steht jedoch in keinem Zusammenhang mit der vorliegenden Erfindung. An einer Gehäuseseitenwand 22 ist ein vertikal entlang dieser verschiebbarer Griffbügel 24 einer Handbetätigungseinrichtung 26 angeordnet. Mit dieser kann ein innerhalb des Gehäuses 14 vertikal bewegbarer Brotträger (nicht dargestellt) mit Hilfe eines Steuerschlittens (vgl. Figur 2) zwischen einer Röststellung und einer Entnahmestellung hin und her verschoben werden.

Die Röststellung ist typischer Weise dadurch gekennzeichnet, dass der Brotträger dort mittels einer Halteeinrichtung fixierbar ist und erst nach einer gewissen Röstzeit, bspw. durch einen Zeitschalter freigegeben wird, wodurch der Brotträger mitsamt dem Steuerschlitten und der Handbetätigungseinrichtung 26 wieder in die Ausgangs- bzw. Entnahmestellung zurück befördert wird. Die Darstellung der Figur 1 verdeutlicht die Entnahmestellung, bei welcher sich der Griffbügel 24 der Handbetätigungseinrichtung 26 und der damit verbundene Steuerschlitten sowie der Brotträger in der oberen Stellung befindet, bei welcher die zu röstenden Brotscheiben eingelegt bzw. entnommen werden können.

Da die Entnahmestellung einen oberen mechanischen Anschlag bildet, gegen den der Steuerschlitten durch Unterstützung einer Federkraft bei Freigabe der Halteeinrichtung bewegt wird, kann eine zu schnelle Vertikalbewegung einen unerwünscht plötzlichen Stopp am oberen Anschlag bewirken, der einerseits zu einer deutlichen Geräuschentwicklung führen und andererseits ein Herauswerfen der gerösteten Brotscheiben aus den Öffnungen 16 des Röstraums 18 bewirken kann. Beides ist aus Komfortgründen unerwünscht und kann mittels einer geeigneten Dämpfungseinrichtung verhindert werden, welche im Detail anhand der Figur 2 näher erläutert wird.

Der Griffbügel 24 weist seitliche Verbindungsabschnitte 28 auf, welche seitlich entlang einer Abdeckplatte 30 geführt sind. Die Abdeckplatte 30 ist Teil des Gehäuses 14 bzw. lösbar mit diesem verbunden. An der zum Gehäuse 14 weisenden und damit verdeckten Innenseite 32 der Abdeckplatte 30 ist eine Zahnstange 34 integriert, die mit einem am Steuerschlitten 36, an dem der Griffbügel 24 befestigt ist, gelagerten Zahnrad 38 im Eingriff steht. Die Lagerung des Zahnrads 38 an einer Querstrebe 39 des Steuerschlittens 36 kann insbesondere eine Fettfüllung aufweisen, deren Viskosität und/oder Füllmenge für die gewünschten Dämpfungseigenschaften der Verzahnungen der Dämpfungseinrichtung sorgt. Wahlweise kann jedoch auch eine Federeinrichtung vorgesehen sein, welche für eine Dämpfung der Vertikalbewegung des Steuerschlittens 36 in eine oder wahlweise in beide vertikale Bewegungsrichtungen sorgen kann.

Die Zahnstange 34 ist integraler Bestandteil der Abdeckplatte 30, so dass sich die Verzahnungen in ständigem Eingriff miteinander befinden. Durch die einteilige Ausbildung der Zahnstange 34 mit der Abdeckplatte 30, die insbesondere aus einem Kunststoffteil in einem Spritzgießverfahren hergestellt sein kann, ist eine vereinfachte Fertigung und Montage ermöglicht. Es sind keinerlei Ein- oder Ausrückmechanismen für die Verzahnung notwendig, welche einen deutlich erhöhten Fertigungs- und Montageaufwand bedingen würden.

Die perspektivische Detaildarstellung der Figur 2 verdeutlicht die untere Röststellung des Steuerschlittens 36, der in einem Steuerraum 40 zwischen Gehäuseseitenwand 22 mit darauf aufgesetzter Abdeckplatte 30 und Röstraum 18 angeordnet ist. Erkennbar ist weiterhin ein Teil des Gehäusebodens 42, an dem die erforderlichen Verbindungselemente zur Montage des Gehäusedeckels vorgesehen sein können.

Die Abdeckplatte 30 kann entsprechend der gezeigten Ausführungsform mittels mehrerer Rasthaken 44 lösbar an der Gehäuseseitenwand 22 montiert werden. Es sind jedoch auch andere Befestigungsmöglichkeiten denkbar. Die Abdeckplatte 30 erfüllt mehrere Aufgaben. Einerseits bildet sie durch Integration der Zahnstange 34 an ihrer Innenseite 32 einen Teil des Dämpfungsmechanismus. Weiterhin bildet sich eine weitgehende Abdeckung für die Gehäuseöffnungen 46, welche für die Durchführung der Verbindungsabschnitte 28 zwischen Steuerschlitten 36 und Griffbügel 24 der Handbetätigungseinrichtung 26 erforderlich sind. Diese schlitzartigen Gehäuseöffnungen 46 können wahlweise durch eine geeignete Ausbildung einer am Steuerschlitten 36 befestigten und an der Innenseite 32 der Abdeckplatte 30 entlang geführten Abdeckung (nicht dargestellt) abgedeckt werden, falls dies aus gestalterischen Gründen oder aus Gründen der besseren Gehäuseabdichtung gewünscht wird.

Selbstverständlich kann die Handbetätigungseinrichtung 26 auch eine andere als die gezeigte Gestaltung aufweisen. So kann der Griffbügel 24 bspw. eine einseitige Halterung aufweisen, welche nur noch einen Verbindungsabschnitt 28 und damit nur noch eine schlitzartige Gehäuseöffnung 46 an der Gehäuseseitenwand 22 notwendig macht. Der Griffbügel 24 kann wahlweise auch durch einen geeigneten Griff oder Knopf ersetzt werden, so lange die gewünschte Funktionalität erhalten bleibt.

Die Zahnstange 34 kann wahlweise auch lösbar an der Innenseite 32 der Abdeckplatte 30 befestigt sein, bspw. durch eine Clip- oder Schraubverbindung. Aus Gründen einer erhöhten Lebensdauer kann es auch sinnvoll sein, die Verzahnung bzw. die gesamte Zahnstange 34 aus verschleißfestem Metall zu fertigen, während die Abdeckplatte 30 aus Kunststoff besteht. Ein solcher Materialverbund kann ggf. auch durch ein geeignetes Fertigungsverfahren in einem zweistufigen Arbeitsgang hergestellt werden, indem eine metallische Zahnstange 34 mit der aus Kunststoff bestehenden Abdeckplatte 30 vergossen wird.

### Bezugszeichenliste

- 10: Brotröster
- 12: Oberseite
- 14: Gehäuse
- 16: Öffnung
- 18: Röstraum
- 20: Röstauflage
- 22: Gehäuseseitenwand
- 24: Griffbügel
- 26: Handbetätigungseinrichtung
- 28: Verbindungsabschnitt
- 30: Abdeckplatte
- 32: Innenseite
- 34: Zahnstange
- 36: Steuerschlitten
- 38: Zahnrad
- 39: Querstrebe
- 40: Steuerraum
- 42: Gehäuseboden
- 44: Rasthaken
- 46: Gehäuseöffnung

## Patentansprüche

1. Elektrischer Brotröster (10) mit einem Gehäuse (14), das mindestens einen Röstraum (18) und einen daneben angeordneten Steuerraum aufweist, in dem ein Steuerschlitten (36) und ein daran gehalteter, sich durch den Röstraum (18) erstreckender Brotträger mittels einer in einer Gehäuseseitenwand (22) geführten und nach außen ragenden Handbetätigungseinrichtung (26) von einer Entnahmestellung gegen den Widerstand eines Federelementes in eine Röststellung bewegbar ist und in dieser mittels einer Halteeinrichtung fixierbar ist, bis die Halteeinrichtung den Steuerschlitten freigibt , und mit einer Dämpfungseinrichtung, die durch eine Zahnstange (34) und ein damit kämmendes Zahnrad (38) gebildet ist, **dadurch gekennzeichnet, dass** das Zahnrad (38) der Handbetätigungseinrichtung (26) zugeordnet ist, und dass die Zahnstange (34) am Gehäuse (14) bzw. an einem fest mit diesem verbundenen Gehäuseteil fixiert ist.

2. Elektrischer Brotröster nach Anspruch 1, **dadurch gekennzeichnet, dass** die Zahnstange (34) integraler Bestandteil des Gehäuses (14) bzw. des fest mit diesem verbundenen Gehäuseteils ist.

3. Elektrischer Brotröster nach Anspruch 1 oder 2, **dadurch gekennzeichnet, dass** die Zahnstange (34) an einer Innenseite (32) einer Abdeckplatte (30) angeordnet ist, die außen an der Gehäuseseitenwand (22) befestigt ist.

4. Elektrischer Brotröster nach einem der voranstehenden Ansprüche, **dadurch gekennzeichnet, dass** die Zahnstange (34) einstückig mit der Abdeckplatte (30) ausgebildet ist.

5. Elektrischer Brotröster nach einem der voranstehenden Ansprüche, **dadurch gekennzeichnet, dass** die Abdeckplatte (30) mit der an ihrer Innenseite (32) ausgebildeten Zahnstange (34) aus einem Kunststoff- oder Metallspritzgussteil hergestellt ist.

6. Elektrischer Brotröster nach einem der voranstehenden Ansprüche, **dadurch gekennzeichnet, dass** das Zahnrad (38) drehbar an dem verschiebbaren Steuerschlitten (36) der Handbetätigungseinrichtung (26) gelagert ist, die an der Gehäuseseitenwand (22) entlang der Abdeckplatte (30) verschiebbar ist.

7. Elektrischer Brotröster nach Anspruch 6, **dadurch gekennzeichnet, dass** der verschiebbare Steuerschlitten (36) einen Griffbügel (24) aufweist, der an der Gehäuseseitenwand (22) in vertikaler Richtung verschiebbar ist.

8. Elektrischer Brotröster nach Anspruch 6 oder 7, **dadurch gekennzeichnet, dass** seitliche Verbindungsabschnitte (28) des Griffbügels (24) die Abdeckplatte (30) seitlich umgreifen.

9. Elektrischer Brotröster nach einem der voranstehenden Ansprüche, **dadurch gekennzeichnet, dass** sich Zahnrad (38) und Zahnstange (34) in ständigem Eingriff befinden.

10. Elektrischer Brotröster nach einem der voranstehenden Ansprüche, **dadurch gekennzeichnet, dass** die Lagerung des Zahnrads (38) eine die Drehbewegung abbremsende Fettfüllung aufweist.
